# FASCICULE DE BREVET EUROPEEN

(11) **EP 0 464 568 B1**
(45) Date de publication et mention de la délivrance du brevet: **18.01.1995**
(21) Numéro de dépôt: 91110392.7
(22) Date de dépôt: 24.06.1991
(51) Int. Cl.: C03C 25/02, G02B 6/16

(54) **Procédé de fabrication d'une fibre optique destinée notamment à la réflectométrie temporelle**
Verfahren zur Herstellung einer optischen Faser, insbesondere bestimmt für die Zeitbereichsreflektometrie
Method of manufacturing an optical fibre, especially for the time-domain reflectometry

(30) Priorité: 26.06.1990 FR 9008017
(43) Date de publication de la demande: 08.01.1992
(73) Titulaire: ALCATEL FIBRES OPTIQUES, F-95871 Bezons Cedex (FR)
(72) Inventeur: Brehm, Claude, F-92120 Montrouge (FR); Tardy, André, F-91520 Egly (FR); Boniort, Jean-Yves, F-91470 Limours (FR); Com-Nougue, Jacques, F-75012 Paris (FR)
(74) Mandataire: Weinmiller, Jürgen

(56) Documents cités:
- WO-A-89/10904
- GB-A- 2 155 357
- GB-A- 2 188 719
- US-A- 4 491 463

## Description

La présente invention concerne un procédé de fabrication d'une fibre optique destinée notamment à la réflectométrie temporelle.

L'utilisation de la technique de la réflectométrie temporelle (O.T.D.R.- Optical Time Domain Reflectometry) est bien connue, soit pour caractériser longitudinalement une fibre, soit pour interroger un réseau de capteurs.

Cette technique consiste à injecter dans la fibre à tester une impulsion lumineuse d'une largeur de quelques dizaines de nanosecondes avec un taux de répétition de l'ordre du kHz. La lumière réfléchie est enregistrée en fonction du temps ; elle peut avoir deux origines, soit une diffusion intrinsèque à la matière vitreuse, de type Rayleigh, soit la présence de défauts réfléchissants. Ceci permet de localiser et de quantifier des hétérogénéités et des déformations du guide.

Ce phénomène peut aussi être utilisé pour interroger et localiser un réseau de points sensibles répartis le long de la fibre. De tels capteurs permettent de mesurer des forces de pression. Ils sont basés sur la détermination des pertes induites par des effets de microcourbures.

La fibre peut être placée entre deux plaquettes nervurées, comme indiqué dans le brevet US-A-4 463 254.

Une autre possibilité, mise en oeuvre dans les capteurs HERGALITE, fabriqués par la Société HERGA Electric Limited, consiste à créer un microcintrage périodique de la fibre.

La demande de brevet Européen 0238 440 du 03/03/87 propose d'intégrer des discontinuités dans le revêtement protecteur de la fibre. Le document GB-A-2 188 719 propose un revêtement en forme d'hélice formé par l'embossement ou par une polymérisation contrôlée.

Aucune des structures précédentes ne peut être réalisée en continu au cours même du fibrage.

La présente invention a pour but d'éviter cet inconvénient et de proposer un procédé beaucoup plus économique que les procédés antérieurs.

La présente invention a pour objet un procédé de fabrication d'une fibre optique destinée notamment à la réflectométrie temporelle, procédé selon lequel, au cours du fibrage, on dépose sur la fibre un revêtement continu de faible épaisseur, caractérisé par le fait que l'on réalise ensuite une ablation partielle de ce revêtement, en forme d'hélice de même axe que la fibre, par la mise en oeuvre d'un faisceau laser tournant dans un plan orthogonal audit axe, pendant le défilement de la fibre.

Selon un mode de réalisation ledit revêtement est obtenu par dépôt en phase vapeur, de carbone, de carbure de silicium, ou de nitrure de silicium.

Selon un autre mode de réalisation ledit revêtement est obtenu par enduction de métal ou d'alliage métallique fondu.

A titre d'exemple ledit faisceau laser est issu d'un laser continu présentant une longueur d'onde de 1,06 micron, mais on peut également utiliser un laser émettant dans l'ultra-violet à une longueur d'onde comprise entre 190 et 400 nanomètres.

Selon une variante préférentielle, on réalise ledit faisceau tournant dans un plan orthogonal à l'axe de la fibre en disposant autour de cette fibre un miroir conique percé en son centre, un miroir plan incliné percé en son centre, une lentille recevant le faisceau laser et animée d'un mouvement de rotation autour d'un axe parallèle à son axe optique.

La présente invention a également pour objet une fibre optique destinée notamment à la réflectométrie temporelle, comportant un revêtement mince en un matériau choisi parmi le carbone, le carbure de silicium, le nitrure de silicium, un métal ou un alliage métallique, caractérisée par le fait que ce revêtement est interrompu suivant une zone en forme d'hélice de même axe que la fibre.

L'épaisseur du revêtement est comprise entre un dixième de micron et quelques microns.

De préférence cette fibre est munie d'une gaine supplémentaire protectrice en matériau plastique.

D'autres caractéristiques et avantages de la présente invention apparaîtront au cours de la description suivante d'un mode de réalisation donné à titre illustratif mais nullement limitatif.
Dans le dessin annexé :
- la figure 1 est un schéma d'un dispositif de fibrage permettant la mise en oeuvre du procédé selon l'invention,
- la figure 2 est une vue schématique agrandie du détail d'une fibre selon l'invention référencé II dans la figure 1.

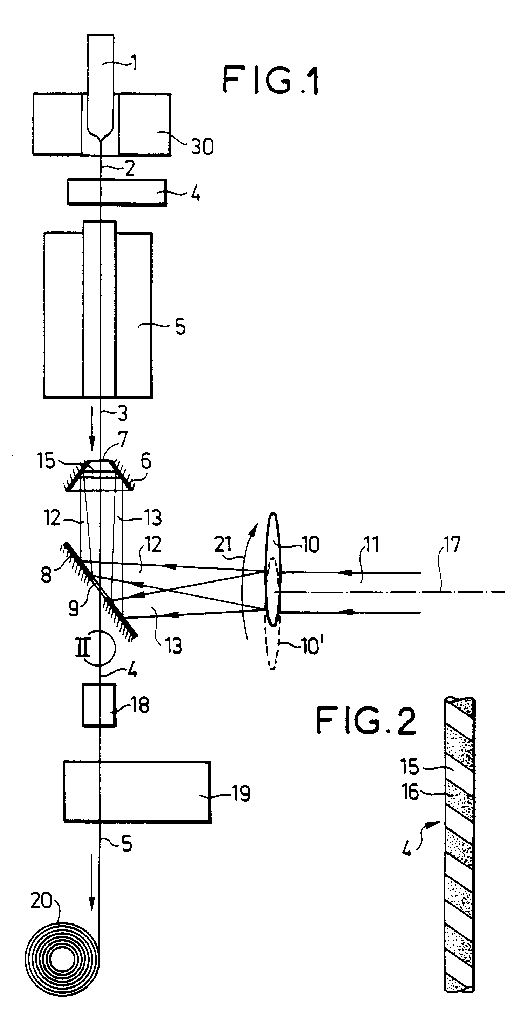

On voit dans la figure 1 une installation de fibrage associée à une préforme 1. Elle comporte un four de fibrage 30, un dispositif de contrôle 4 du diamètre de la fibre 2 issue du four 30, un dispositif 5 pour munir en continu la fibre 2 d'un revêtement métallique ou minéral, par dépôt en phase vapeur ou enduction.

A titre d'exemple la demande de brevet français n° 2 631 462 décrit des moyens pour revêtir une fibre optique d'un métal choisi parmi l'étain, l'indium, le bismuth, le plomb, l'antimoine, l'argent, l'aluminium et leurs alliages.
On peut également envisager un revêtement de carbone, carbure ou nitrure de silicium par dépôt en phase vapeur.

On a référencé 3 la fibre 2 munie de son revêtement.
Pour une fibre de diamètre 125 µm, l'épaisseur du revêtement en carbone est par exemple comprise entre 0,1 µm et 5 µm.

Selon l'invention on met en oeuvre un faisceau laser continu 11, de longueur d'onde égale par exemple à 1,06 µm, de puissance de l'ordre de 100 watts, et d'axe 17 orthogonal à la fibre 3. Sur le trajet de ce faisceau sont disposés :
- une lentille convergente 10 excentrée par rapport à l'axe 17, associée à des moyens permettant de la faire tourner autour de l'axe 17, (cf flèche 21),
- un miroir plan 8 incliné à 45 degrés par rapport à la fibre 3 et à l'axe 17, et percé en son centre 9 pour laisser le passage à la fibre 3,
- un miroir conique 6 d'axe confondu avec la fibre 3 et percé également en son centre 7.

On a représenté le trajet du faisceau 11 pour deux positions 10 et 10' de la lentille 10.
Lorsque la lentille est dans la position 10, le faisceau qu'elle transmet et qui est réfléchi par les miroirs 8 et 6 est référencé 12. Lorsqu'elle est dans la position 10', ce faisceau est référencé 13.

On voit donc que le faisceau réfléchi par le miroir 6 tourne autour de la fibre 3 orthogonalement à cette dernière.
Par suite du défilement de la fibre, l'impact du faisceau laser trace sur sa surface une hélice 15 en enlevant le matériau du revêtement. On obtient alors la fibre référencée 4 sur la figure 2 avec le revêtement 16 subsistant.

La vitesse de rotation de la lentille 10 permet de définir le pas de l'hélice 15 en fonction de la vitesse de fibrage, et d'optimiser les microcourbures de la fibre en fonction de son utilisation ultérieure. A titre d'exemple, la vitesse de fibrage est de 5 mètres par minute et la vitesse de rotation de la lentille 10 est de 1000 tours par minute.

La fibre 4 passe ensuite dans un dispositif 18 d'enduction par un revêtement plastique, revêtement polymérisé dans le four 19. La fibre 5 ainsi gainée est stockée en 20 ; elle garde de cette manière des propriétés mécaniques satisfaisantes.

Bien entendu l'invention n'est pas limitée au mode de réalisation qui vient d'être décrit.

Une fibre selon l'invention dans laquelle les discontinuités sont intégrées directement dans la surface de la fibre au cours du fibrage peut donc être utilisée dans des capteurs linéaires continus, tels que les capteurs de pression et de température, ou dans des filtres sélectifs en longueur d'onde, comme ceux qui sont décrits dans l'article de C.D. Poole et C.D. Townsend OFC.90, TU G2 page 25. Pour les capteurs de pression, on peut citer des utilisations dans les détecteurs d'intrusion, les bordures de sécurité, les tapis, les dispositifs de pesage. Pour les capteurs de température on peut mentionner la détection de points chauds le long d'un câble, en divers points d'une machine ou d'une installation quelconque, la protection contre les incendies...

## Revendications

1. Procédé de fabrication d'une fibre optique destinée notamment à la réflectométrie temporelle, procédé selon lequel, au cours du fibrage, on dépose sur la fibre (2) un revêtement continu de faible épaisseur, caractérisé par le fait que l'on réalise ensuite une ablation partielle de ce revêtement, en forme d'hélice (15) de même axe que la fibre, par la mise en oeuvre d'un faisceau laser (17) tournant dans un plan orthogonal audit axe, pendant le défilement de la fibre.

2. Procédé de fabrication selon la revendication 1, caractérisé par le fait que ledit revêtement est obtenu par dépôt en phase vapeur, de carbone, de carbure de silicium, ou de nitrure de silicium.

3. Procédé de fabrication selon la revendication 1, caractérisé par le fait que ledit revêtement est obtenu par enduction de métal ou d'alliage métallique fondu.

4. Procédé de fabrication selon l'une des revendications 1 à 3, caractérisé par le fait que ledit faisceau laser est issu d'un laser continu (11) présentant une longueur d'onde de 1,06 micron, ou comprise entre 0,190 et 0,400 micron.

5. Procédé de fabrication selon l'une des revendications précédentes, caractérisé par le fait que l'on réalise ledit faisceau tournant dans un plan orthogonal à l'axe de la fibre en disposant autour de cette fibre un miroir conique (6) percé en son centre (7), un miroir plan (8) incliné percé en son centre (9), une lentille (10) recevant le faisceau laser et animée d'un mouvement de rotation autour d'un axe (17) parallèle à son axe optique.

## Claims

1. Method of manufacturing an optical fibre suitable for use in optical time domain reflectometry in which, during drawing of the fibre (2), a thin continuous coating is deposited on the fibre, characterised in that said coating is thereafter partially ablated in the form of a helix (15) coaxial with the fibre by means of a laser beam (17) rotating in a plane orthogonal to said axis simultaneously with movement of the fibre.

2. Manufacturing method according to claim 1 characterised in that said coating is obtained by vapour phase deposition of carbon, silicon carbide or silicon nitride.

3. Manufacturing method according to claim 1 characterised in that said coating is obtained by application of molten metal or metal alloy.

4. Manufacturing method according to any one of claims 1 to 3 characterised in that said laser beam is provided by a continuous laser (11) operating at a wavelength of 1.06 microns or between 0.190 microns and 0.400 microns.

5. Manufacturing method according to any one of the preceding claims characterised in that said beam rotating in a plane orthogonal to the fibre axis is obtained by disposing around said fibre a conical mirror (6) with an aperture (7) at its centre and an inclined plane mirror (8) with an aperture (9) at its centre, a lens (10) receiving the laser beam being adapted to rotate about an axis parallel to its optical axis.

## Patentansprüche

1. Verfahren zur Herstellung einer Lichtleitfaser, die insbesondere für die Zeitbereichsreflektrometrie bestimmt ist, wobei während des Faserziehens auf die Faser (2) eine kontinuierliche Umhüllung geringer Dicke aufgebracht wird, dadurch gekennzeichnet, daß dann diese Umhüllung teilweise in Form einer Spirale (15) gleicher Achse wie die Faser durch Anwendung eines Laserstrahls (17) wieder abgetragen wird, der in einer Ebene senkrecht zu dieser Achse während des Durchlaufs der Faser umläuft.

2. Herstellungsverfahren nach Anspruch 1, dadurch gekennzeichnet, daß sich die Umhüllung durch Abscheidung von Kohlenstoff, Siliziumkarbid oder Siliziumnitrid aus der Dampfphase ergibt.

3. Herstellungsverfahren nach Anspruch 1, dadurch gekennzeichnet, daß sich die Umhüllung durch Bestreichen mit flüssigem Metall oder einer flüssigen Metallegierung ergibt.

4. Herstellungsverfahren nach einem der Ansprüche 1 bis 3, dadurch gekennzeichnet, daß der Laserstrahl von einem Dauerstrichlaser (11) stammt, der eine Wellenlänge von 1,06 µm oder von zwischen 0,190 und 0,400 µm besitzt.

5. Herstellungsverfahren nach einem der vorhergehenden Ansprüche, dadurch gekennzeichnet, daß der in einer Ebene senkrecht zur Achse der Faser rotierende Laserstrahl dadurch gebildet wird, daß um diese Faser ein konischer Spiegel (6) mit einem Loch (7) in seinem Zentrum und ein ebener geneigter Spiegel (8) mit ebenfalls einem Loch (9) in seinem Zentrum angeordnet werden, wobei eine Linse (10) den Laserstrahl empfängt und um eine parallel zur optischen Achse verlaufende Drehachse (17) in Drehung versetzt wird.
